# EUROPÄISCHE PATENTANMELDUNG

(11) **EP 0 882 565 A1**
(43) Veröffentlichungstag der Anmeldung: **09.12.1998**
(21) Anmeldenummer: 98109816.3
(22) Anmeldetag: 29.05.1998
(51) Int. Cl.: B29C 47/92, G01B 17/02

(54) **Extrudieranlage mit einer eine umlaufende Messkammer aufweisenden Messvorrichtung**

(30) Priorität: 02.06.1997 DE 19723005
(71) Anmelder: CONPRO GmbH, D-32602 Vlotho (DE)
(72) Erfinder: Neumann, Ulrich, 32549 Bad Oeynhausen (DE)
(74) Vertreter: Müller, Karl-Ernst, Dr., Dipl.-Ing.

(57) **Zusammenfassung**

Bei einer Extrudieranlage für Kunststoffrohre, bestehend aus einem Extruder und einer daran anschließenden Kalibrierung sowie einer Meßvorrichtung für die Lunkererkennung und/oder Wanddickenmessung des extrudierten Rohres, welche wenigstens einen um das extrudierte Rohr mit Abstand dazu rotierend umlaufenden, nach dem Ultraschallprinzip mit Wasser als Ankoppelmedium arbeitenden Meßkopf aufweist, soll auch bei hohen Rotationsgeschwindigkeiten eine turbulenz- und blasenfreie Wasserankopplung des Meßkopfes an das extrudierte Rohr gegeben sein. Hierzu ist vorgesehen, daß der Meßkopf (18) in einer berührungslos mit einem Abstand (20) um das extrudierte Rohr (11) umlaufenden rohrförmigen Meßkammer (19) angeordnet ist und die umlaufende Meßkammer (19) in ihrem zwischen dem Meßkopf (18) und dem extrudierten Rohr (11) gelegenen und einen Ankoppelraum (22) ausbildenden Bereich wenigstens einen Wasseranschluß (23) zum dem Ausgleich von durch den Abstand (20) bedingten Wasserverlusten dienenden Nachführen von Wasser aufweist.

## Beschreibung

Die Erfindung betrifft eine Extrudieranlage für Kunststoffrohre, bestehend aus einem Extruder und einer daran anschließenden Kalibrierung sowie einer Meßvorrichtung für die Lunkererkennung und/oder Wanddickenmessung des extrudierten Rohres, welche wenigstens einen um das extrudierte Rohr mit Abstand dazu rotierend umlaufenden, nach dem Ultraschallprinzip mit Wasser als Ankoppelmedium arbeitenden Meßkopf aufweist.

Eine Extrudieranlage der vorgenannten Gattung mit einer Kalibrierhülse und einem nachgeschalteten Vakuumtank als Kalibrierung ist in der EP 0 573 907 A1 beschrieben; im Rahmen der dort beschriebenen mehreren Ausführungsbeispiele einer Extrudieranlage ist es bekannt, im Hinblick auf eine möglichst frühzeitige Vermessung des extrudierten Kunststoffrohres einen die Meßvorrichtung aufnehmenden Meßring am vorderen Ende der Kalibrierhülse, und zwar innerhalb des Vakuumbereichs, anzuordnen, wobei in dem Meßring stationäre oder auch rotierend um das extrudierte Rohr umlaufende Meßköpfe für die Wanddickenmessung oder die Lunkererkennung angeordnet sind. Diese Meßköpfe arbeiten nach dem Ultraschallprinzip und sind über eine in dem Meßring anstehende Wassersäule an das zu vermessende Rohr angekoppelt. Mit der bekannten Anordnung der Meßvorrichtung ist es in vorteilhafter Weise bereits möglich, durch Vermessung des noch heißen Rohres innerhalb des Vakuumbereiches eine gute Auflösung der Meßsignale sicherzustellen, ohne daß diese durch die sich mit der Abkühlung des Rohres bildende Festschicht beeinträchtigt werden.

Nachteilig bei der bekannten Anordnung der Meßvorrichtung ist jedoch, daß sich aufgrund der Rotationsbewegung des Meßkopfes in dem Meßring Turbulenzen in der Wassersäule des Meßringes einstellen, da sich der Meßkopf unter Verdrängung des Wassers durch die Wassersäule hindurchbewegt. Mit den dadurch entstehenden Turbulenzen geht zusätzlich die Bildung von Luftbläschen in der Wassersäule einher, welche zu einer Verfälschung der Meßergebnisse fuhren können. Diese Nachteile gelten auch für die aus dem Stand der Technik weiterhin bekannte alternative Kalibrierung in Form eines Kühltanks mit zugeordneter Stützluftkalibrierung.

Der Erfindung liegt daher die Aufgabe zugrunde, eine Extrudieranlage der eingangs genannten Art sowohl für die Stützluftkalibrierung als auch für den Einsatz einer Kalibrierhülse im Hinblick auf die Ausbildung von deren Meßvorrichtung derart zu verbessern, daß auch bei hohen Rotationsgeschwindigkeiten eine turbulenz- und blasenfreie Wasserankopplung des Meßkopfes an das extrudierte Rohr gegeben ist.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht in ihrem Grundgedanken vor, daß der Meßkopf in einer berührungslos mit einem Abstand um das extrudierte Rohr umlaufenden rohrförmigen Meßkammer angeordnet ist und die umlaufende Meßkammer in ihrem zwischen dem Meßkopf und dem extrudierten Rohr gelegenen und einen Ankoppelraum ausbildenden Bereich wenigstens einen Wasseranschluß zum dem Ausgleich von durch den Abstand bedingten Wasserverlusten dienenden Nachführen von Wasser aufweist.

Mit der Erfindung ist der Vorteil verbunden, daß in der um das extrudierte Rohr rotierenden Meßkammer der Meßkopf über eine quasi stationäre Wassersäule an das zu vermessende Rohr angekoppelt ist. Der Umlauf der Meßkammer um das extrudierte Rohr erfolgt mit einem geringen Abstand, über den gewollt Wasseranteile aus dem Ankoppelraum längs des extrudierten Rohres austreten, so daß die Meßfläche des Meßkopfes ständig abgespült wird. Die damit verbundenen Wasserverluste werden mittels einer auch bei rotierender Meßkammer kontinuierlich arbeitenden Wasserversorgung ausgeglichen. Mit der erfindungsgemäßen Ausgestaltung der Meßvorrichtung sind auch gewünschte hohe Rotationsgeschwindigkeiten von beispielsweise 300 bis 1200 U/min realisierbar, weil die Meßkammer im Rahmen der Extrudieranlage besser gelagert werden kann, als dies bei einem Trägerarm für einen umlaufenden Meßkopf nach dem Stand der Technik möglich ist.

Nach einem Ausführungsbeispiel der Erfindung ist vorgesehen, daß der Durchmesser der Meßkammer der Abmessung des Meßkopfes zum diesen dichten Umschließen angepaßt ist, wobei zusätzlich zwischen Meßkammer und Meßkopf eine den Ankoppelraum abdichtende Dichtung angeordnet sein kann.

Um die Meßvorrichtung an unterschiedliche Rohrdurchmesser des extrudierten Rohres anpassen zu können, ist nach einem Ausführungsbeispiel der Erfindung vorgesehen, daß die Meßkammer gegenüber dem extrudierten Rohr längsverschiebbar angeordnet ist. Dabei ist die Einhaltung des Abstandes in Form eines zwischen dem extrudierten Rohr und der Meßkammer bestehenden Spaltes sicherzustellen, der nach einem Ausführungsbeispiel der Erfindung in einem Bereich zwischen 1 und 3 mm liegen kann.

In alternativen Ausführungsformen der Erfindung kann vorgesehen sein, daß entweder der Meßkopf in der ortsfest angeordneten Meßkammer verschiebbar ist oder daß die Meßkammer relativ zum ortsfesten Meßkopf verschiebbar ist, um auf diese Weise die Größe des Ankoppelraumes verändern und damit unterschiedliche Wasservorlaufstrecken für die Meßsignale des Meßkopfes einstellen zu können.

Nach einem Ausführungsbeispiel der Erfindung ist die Meßvorrichtung an einem das extrudierte Rohr umschließenden ortsfesten Trägerring umlaufenden Rotor gehaltert, der auch hohe Rotationsgeschwindigkeiten zuläßt. Dabei kann nach Ausführungsbeispielen der Erfindung entweder der Meßkopf an dem Rotor befestigt und die Meßkammer an dem Meßkopf gehaltert sein, oder es kann die Meßkammer ihrerseits an dem Rotor befestigt und der Meßkopf in der Meßkammer gehaltert sein. Nach einem Ausführungsbeispiel der Erfindung kann die Meßvorrichtung auch mehrere umlaufende Meßkammern mit einem jeweils darin angeordneten Meßkopf aufweisen, wobei zur Fixierung und Stabilisierung der mehreren Meßkammern diese an einem umlaufenden Fixierring gehaltert sein können. Es kann nach einem Ausführungsbeispiel auch vorgesehen sein, daß die Meßkammer als geschlossener und um das extrudierte Rohr umlaufender Meßring ausgebildet ist.

Die Anordnung eines gehäuseartigen, das extrudierte Rohr umschließenden Trägerringes ermöglicht es, in einer an sich aus der gattungsbildenden EP 0 573 907 A1 bekannten Weise den Trägerring als Halterung für eine Kalibrierhülse für das extrudierte Rohr auszubilden, wobei nach einem Ausführungsbeispiel der Erfindung die umlaufende Meßkammer in dem Trägerring in Extrudierrichtung unmittelbr hinter der Kalibrierhülse angeordnet sein kann. Sollte mit einer Standardkalibrierhülse bei bestimmten Rohren die Abkühlung während der Laufstrecke bis zum Erreichen der Meßvorrichtung bereits zu groß sein, kann nach einem Ausführungsbeispiel der Erfindung die Meßvorrichtung auch zwischen zwei Kalibrierhülsen angeordent sein, beispielsweise einer ersten Kurzkalibrierhülse und einer zweiten Kalibrierhülse, die hinter der Meßvorrichtung angeordnet ist.

Zur Ausbildung der Wasserversorgung der rotierenden Meßkammer kann nach einem Ausführungsbeispiel der Erfindung vorgesehen sein, daß der Wasseranschluß der Meßkammer als eine flexible zum Rotor führende Leitung ausgebildet und mit einer in dem Rotor ortsfest angeordneten Leitung verbunden ist, welche Rotorleitung an eine über Rotationsdichtungen abgedichtete, zwischen Rotor und Trägerring angeordnete ringförmige Wasserkammer angeschlossen ist.

Soweit eine blasenfreie Aufbereitung des Wassers in der Wasserkammer zweckmäßig ist, um das dem Ankoppelraum zuzuführende Wasser als Ankoppelmedium zu nutzen, kann nach einem Ausführungsbeispiel der Erfindung vorgesehen sein, daß die Wasserkammer an einem in dem Trägerring ausgebildeten Wasserzulauf und an eine über eine Ventilanordnung regelbare Abzugsleitung angeschlossen ist. Hiermit ist in vorteilhafter Weise die Möglichkeit verbunden, daß in der ringförmigen Wasserkammer gegebenenfalls vorhandene Luftblasen zum Trägerring hin gedrückt und hier über die Abzugsleitung abgezogen werden können. Hierzu dient die vorgesehene Ventilanordnung, über die Luftanteile regelbar abziehbar sind.

Zum Schutz der Meßkammer und des Meßkopfes kann vorgesehen sein, daß an dem Trägerring in Extrudierrichtung vor der Meßvorrichtung eine auf den Durchmesser des extrudierten Rohres einstellbare Ziehblende angeordnet ist. Diese Ziehblende hat weiterhin den Vorteil, daß sie das extrudierte Rohr vor dem Durchlaufen der Meßvorrichtung stützt und fixiert, so daß die Meßergebnisse durch eine Bewegung des Rohres nicht verfälscht werden. Hierzu kann nach einem Ausführungsbeispiel der Erfindung ergänzend vorgesehen sein, daß auch in Extruderrichtung hinter der Meßvorrichtung eine entsprechend auf den Durchmesser des extrudierten Rohres einstellbare zweite Ziehblende angeordnet ist, die für eine zusätzliche Fixierung des Rohres sorgt, da das Rohr in den beiden Ziehblenden beziehungsweise deren Öffnungen liegt und geführt ist.

In einer weiteren Ausführungsform der Erfindung kann schließlich vorgesehen sein, daß eine zusätzliche und mit eigener Wasserversorgung und einer Abdichtung gegen das extrudierte Rohr ausgebildete Wasserkammer zum Aufbringen eines Wasserfilms auf das extrudierte Rohr in Extrudierrichtung vor der Meßvorrichtung angeordnet ist.

Nach einem Ausführungsbeispiel der Erfindung kann vorgesehen sein, daß die Meßvorrichtung in einer ein Wasser-Vollbad aufweisenden Kühlkammer angeordnet ist, womit der Vorteil verbunden ist, daß in diesem Fall die über den Spalt zwischen Meßkammer und Rohr auftretenden Wasserverluste begrenzt sind. Gleichzeitig ist aber nach wie vor die Wirkung gegeben, daß die Wasserzufuhr in die Meßkammer für ein Abspülen des Meßkopfes sorgt, wobei das zugeführte Wasser dann in die Kühlkammer austritt. Bei der Anordnung der ein Wasser-Vollbad aufweisenden Kühlkammer zur Aufnahme der Meßvorrichtung kann weiterhin vorgesehen sein, daß die der Meßvorrichtung vorgeschaltete Kalibrierhülse in einer der Vollbad-Kühlkammer vorgeschalteten und von dieser abgetrennten, mit einer Sprühkühlung ausgerüsteten Kühlkammer angeordnet ist und zwischen den Kühlkammern Verbindungen eingerichtet sind. Dabei kann insbesondere die nach einem Ausführungsbeispiel der Erfindung vorgesehene, in Extrudierrichtung vor der Meßvorrichtung angeordnete Ziehblende für die Abtrennung der unterschiedlich ausgerüsteten Kühlkammern sorgen, so daß die Ziehblende auch das Aufstauen des Wasser-Vollbades übernimmt.

In der Zeichnung sind Ausführungsbeispiele der Erfindung wiedergegeben, welche nachstehend beschrieben sind. Es zeigen:
- Fig. 1: eine Extrudieranlage in einer ausschnittsweisen geschnittenen Seitenansicht,
- Fig. 2: den Bereich der Ankoppelung der Meßvorrichtung an das extrudierte Rohr in einer Einzeldarstellung für eine andere Ausführungsform,
- Fig. 3: eine ausschnittsweise Darstellung der Extrudieranlage mit zwei, an einem Fixierring angeordneten Meßkammern.

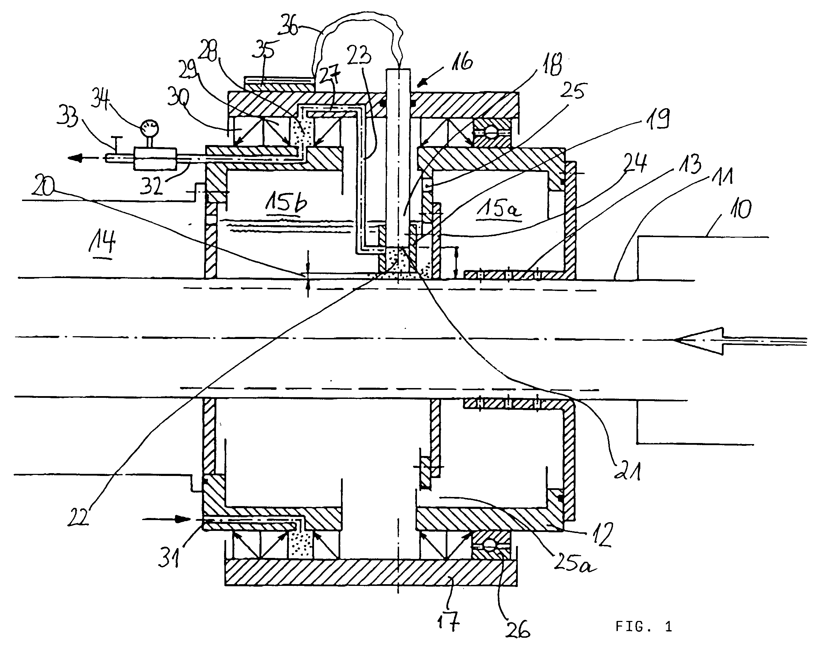

In Figur 1 ist ausschnittsweise eine Extrudieranlage mit einer Meßvorrichtung dargestellt, bei welcher die Meßvorrichtung unmittelbar in Nähe des Extrusionswerkzeuges angeordnet ist. Wie nicht weiter dargestellt, kann die im einzelnen erläuterte Meßvorrichtung alternativ auch außerhalb der Vakuumzone am hinteren Ende der Extrusionslinie eingesetzt werden.

Bei dem in Figur 1 dargestellten Ausführungsbeispiel schließt sich an das Extrusionswerkzeug 10 ein das extrudierte Rohr 11 umschließender, ortsfest angeordneter Trägerring 12 an, an dessen dem Extrusionswerkzeug 10 zugewandten Ende eine Kalibrierhülse 13 gehaltert ist. Der Trägerring 12 schließt an einen Vakuumtank 14 an und er bildet in sich zwei Kühlkammern 15a und 15b aus. Der Aufbau einer derartigen Extrusionslinie ist unter anderem auch in der EP 0 573 907 A1 beschrieben. Bei dem dargestellten Ausführungsbeispiel ist die in Extrusionsrichtung vordere Kühlkammer 15a, in welcher sich die Kalibrierhülse 13 befindet, mit einer Sprühkühlung an sich bekannter Bauart versehen, während die Kühlkammer 15b, in welcher die noch zu beschreibende Meßvorrichtung angeordnet ist, mit einem Wasser-Vollbad versehen ist.

In dem Trägerring 12 ist dem Ende der Kalibrierhülse 13 unmittelbar benachbart eine Meßvorrichtung 16 angeordnet, die zur Lunkererkennung und/oder zur Wanddickenmessung eingerichtet sein kann. Die Meßvorrichtung 16 besteht aus einem radial zum extrudierten Rohr 11 ausgerichteten Meßkopf 18, der seinerseits fest an einem auf der Außenseite des Trägerringes 12 mittels eines zugeordneten Kugellagers 26 drehbar gelagerten Rotors 17 befestigt ist. An dem dem extrudierten Rohr 11 zugewandten Ende des Meßkopfes 18 befindet sich eine den Meßkopf 18 umschließende rohrförmige Meßkammer 19, die berührungslos unter Ausbildung eines in Form eines Spaltes vorliegenden Abstandes 20 zum extrudierten Rohr 11 angeordnet ist. Zwischen der von dem Ende der Meßkammer 19 radial auswärts beabstandeten Meßfläche 21 des Meßkopfes 18 und dem extrudierten Rohr 11 bildet die Meßkammer 19 einen Ankoppelraum 22 aus, der mit Wasser als Ankoppelmedium für den nach dem Ultraschallprinzip arbeitenden Meßkopf 18 gefüllt ist. Zum Ausgleich von durch den Abstand 20 bedingten Wasserverlusten weist die Meßkammer 19 einen Wasseranschluß 23 auf, der als flexible Leitung ausgebildet und zu dem Rotor 17 geführt ist. Zum Schutz der Meßvorrichtung 16 ist in Extrudierrichtung vor der Meßvorrichtung 16 noch eine zentrierbare und auf unterschiedliche Durchmesser des extrudierten Rohres 11 einstellbare Ziehblende 24 angeordnet und an dem Trägerring 12 gehaltert.

Im Hinblick auf die Wasserversorgung des Ankoppelraumes 22 der Meßkammer 19 ist der Wasseranschluß 23 an eine in dem Rotor 17 in dessen Axialrichtung ausgebildete Verbindungsleitung 27 angeschlossen, die ihrerseits in eine zwischen dem Rotor 17 und dem Trägerring 12 befindliche ringförmige Wasserkammer 28 mündet; die ringförmige Wasserkammer 28 ist mittels beiderseits zwischen Rotor 17 und Trägerring 19 angeordneter Rotationsdichtungen 29 abgedichtet, wobei sich jeweils in axialer Richtung außenliegend an die Rotationsdichtungen 29 noch Vakuumdichtungen 30 anschließen, um die zwischen Trägerring 12 und Rotor 17 mit Anschluß an die Kühlkammer 15b herrschende Verbindung auch vakuumdicht abzudichten. Über zusätzliche Verbindungen 25 sowie 25a besteht eine Vakuumverbindung auch zwischen der in Extrusionsrichtung vorderen und die Kalibrierhülse 13 enthaltenden Sprühkühlkammer 15a und der durch die Ziehblende 24 davon abgetrennten Vollbad-Kühlkammer 15b. Bei dem dargestellten Ausführungsbeispiel wird das extrudierte Rohr 11 durch die auf dessen Durchmesser eingestellte Ziehblende 24 vor dem Durchlauf durch die Meßvorrichtung 16 gestützt; wie nicht weiter dargestellt, kann auch in Extrudierrichtung hinter der Meßvorrichtung 16 eine zweite Ziehblende angeordnet sein, so daß das extrudierte Rohr 11 sowohl vor dem Durchlauf durch die Meßvorrichtung 16 als auch dahinter abgestützt und geführt ist, womit die Gefahr von Meßfedern deutlich verringert ist.

Zur Versorgung der Wasserkammer 28 mit Wasser ist in dem Trägerring 12 ein Wasserzulauf 31 angeordnet. Da es im Hinblick auf bestmögliche Meßergebnisse auch darauf ankommt, dem Ankoppelraum 22 der Meßkammer 19 blasenfreies Wasser zuzuführen, erfolgt eine Vorbehandlung des Wassers in der Wasserkammer 28 dadurch, daß aufgrund des mit vergleichsweise großer Rotationsgeschwindigkeit rotierenden Rotors 17 Luftblasen in der Wasserkammer 28 nach innen zum Trägerring 12 gedrückt und hier über eine in dem Trägerring 12 zusätzlich ausgebildete Abzugsleitung 32 aus der Wasserkammer 28 abgezogen werden können. Hierzu ist die Abzugsleitung 32 mit einer Ventilanordnung 33 sowie mit einem Druck-Manometer 34 versehen, damit auf diese Weise auch der Druck in der Wasserkammer 28 regelbar ist.

Der radial zum extrudierten Rohr in dem Rotor 17 angeordnete Meßkopf 18 ist an seinem äußeren freien Ende über Kabelverbindungen 36 an einen auf der Außenseite des Rotors 17 befindlichen Schleifring 35 angeschlossen, so daß von dem Schleifring 35 die vom Meßkopf 18 herkommenden Meßsignale abgegriffen werden können. Im Betrieb rotiert der Rotor 17 mit dem daran gehalterten Meßkopf 18 um das extrudierte Rohr 11, wobei von der Wasserkammer 28 eine Wasserversorgung des Ankoppelraumes 22 in der Meßkammer 19 sichergestellt ist. Soweit aufgrund des zwischen dem stirnseitigen Ende der Meßkammer 19 und dem extrudierten Rohr 11 bestehenden Spaltes 20 Wasser austritt, so sorgt diese Wasserspülung für ein Freispülen der Meßfläche 21 des Meßkopfes 18, und die dadurch bedingten Wasserverluste werden automatisch durch das aus der Wasserkammer 28 über den Wasseranschluß 23 nachströmende Wasser ausgeglichen.

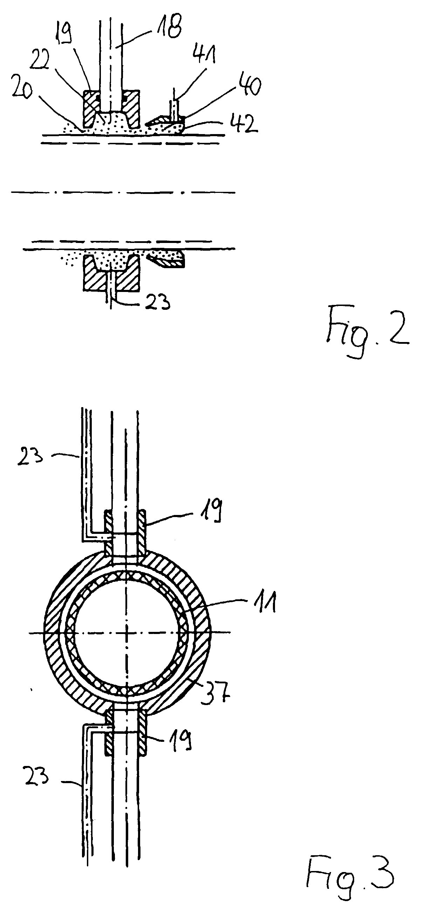

Bei dem in Figur 2 dargestellten Ausführungsbeispiel ist der Meßkammer 19 zusätzlich eine zweite Wasserkammer 40 in Extrusionsrichtung des Rohres 11 vorgeschaltet, wobei diese zweite Wasserkammer 40 über eine Dichtung 42 gegen das extrudierte Rohr 11 abgedichtet und mit einer eigenen Wasserversorgung 41 versehen ist; über diese zweite Wasserkammer 40 wird das extrudierte Rohr 11 vor seinem Eintritt in die Meßvorrichtung 16 mit einem Wasserfilm versehen, der die Ankoppelwirkung verbessert; es kommt hinzu, daß dieser zusätzliche Wasserfilm von der zweiten Wasserkammer 40 einen Wasserverlust aus der Meßkammer 19 entgegen der Extrusionsrichtung vermeiden hilft.

Bei dem in Figur 3 dargestellten Ausführungsbeispiel sind zwei Meßkammern 19 an einem um das extrudierte Rohr 11 umlaufenden Fixierring 37 gehaltert, wobei die beiden Meßkammern 19 jeweils mit einem eigenen Wasseranschluß 23 ausgerüstet sind. Die Fixierung 37 ist in einer nicht dargestellten Weise an dem Rotor 17 befestigt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Extrudieranlage für Kunststoffrohre, bestehend aus einem Extruder und einer daran anschließenden Kalibrierung sowie einer Meßvorrichtung für die Lunkererkennung und/oder Wanddickenmessung des extrudierten Rohres, welche wenigstens einen um das extrudierte Rohr mit Abstand dazu rotierend umlaufenden, nach dem Ultraschallprinzip mit Wasser als Ankoppelmedium arbeitenden Meßkopf aufweist, dadurch gekennzeichnet, daß der Meßkopf (18) in einer berührungslos mit einem Abstand (20) um das extrudierte Rohr (11) umlaufenden rohrförmigen Meßkammer (19) angeordnet ist und die umlaufende Meßkammer (19) in ihrem zwischen dem Meßkopf (18) und dem extrudierten Rohr (11) gelegenen und einen Ankoppelraum (22) ausbildenden Bereich wenigstens einen Wasseranschluß (23) zum dem Ausgleich von durch den Abstand (20) bedingten Wasserverlusten dienenden Nachführen von Wasser aufweist.

2. Extrudieranlage nach Anspruch 1, dadurch gekennzeichnet, daß der Durchmesser der Meßkammer (19) der Abmessung des Meßkopfes (18) zum diesen dichten Umschließen angepaßt ist.

3. Extrudieranlage nach Anspruch 2, dadurch gekennzeichnet, daß zwischen Meßkammer (19) und Meßkopf (18) eine den Ankoppelraum (22) abdichtende Dichtung angeordnet ist.

4. Extrudieranlage nach einem der Ansprüche 1 bis 3, dadurch gekennzeichnet, daß die Meßkammer (19) gegenüber dem extrudierten Rohr (11) längsverschiebbar angeordnet ist.

5. Extrudieranlage nach einem der Ansprüche 1 bis 4, dadurch gekennzeichnet, daß der zwischen dem extrudierten Rohr (11) und der umlaufenden Meßkammer (19) einzustellende Abstand in einem Bereich zwischen 1 und 3 mm liegt.

6. Extrudieranlage nach einem der Ansprüche 1 bis 5, dadurch gekennzeichnet, daß der Meßkopf (18) in der Meßkammer (19) verschiebbar angeordnet ist.

7. Extrudieranlage nach einem der Ansprüche 1 bis 5, dadurch gekennzeichnet, daß die Meßkammer (19) relativ zum ortsfesten Meßkopf (18) verschiebbar ist.

8. Extrudieranlage nach einem der Ansprüche 1 bis 7, dadurch gekennzeichnet, daß die Meßvorrichtung (16) an einem das extrudierte Rohr (11) umschließenden ortsfesten Trägerring (12) umlaufend gelagerten Rotor (17) gehaltert ist.

9. Extrudieranlage nach Anspruch 8, dadurch gekennzeichnet, daß der Meßkopf (18) an dem Rotor (17) befestigt und die Meßkammer (19) an dem Meßkopf (18) gehaltert ist.

10. Extrudieranlage nach Anspruch 8, dadurch gekennzeichnet, daß die Meßkammer (19) an dem Rotor (17) befestigt und der Meßkopf (18) in der Meßkammer (19) gehaltert ist.

11. Extrudieranlage nach einem der Ansprüche 8 bis 10, dadurch gekennzeichnet, daß die Meßvorrichtung (16) mehrere umlaufende Meßkammern (19) mit einem jeweils darin angeordneten Meßkopf (18) aufweist.

12. Extrudieranlage nach Anspruch 11, dadurch gekennzeichnet, daß die mehreren Meßkammern (19) an einem umlaufenden Fixierring (37) gehaltert sind.

13. Extrudieranlage nach einem der Ansprüche 1 bis 10, dadurch gekennzeichnet, daß die Meßkammer (19) als geschlossener und umlaufender Ring ausgebildet ist.

14. Extrudieranlage nach einem der Ansprüche 8 bis 13, dadurch gekennzeichnet, daß der Trägerring (12) als Halterung für eine Kalibrierhülse (13) für das extrudierte Rohr (11) ausgebildet ist.

15. Extrudieranlage nach Anspruch 14, dadurch gekennzeichnet, daß die umlaufende Meßkammer (19) in dem Trägerring (12) in Extrudierrichtung unmittelbar hinter der Kalibrierhülse (13) angeordnet ist.

16. Extrudieranlage nach Anspruch 14, dadurch gekennzeichnet, daß die umlaufende Meßkammer (19) in dem Trägerring (12) in einer Unterbrechung der Kalibrierhülse (13) oder zwischen zwei getrennt an dem Trägerring (12) angeordneten Kalibrierhülsen angeordnet ist.

17. Extrudieranlage nach einem der Ansprüche 8 bis 16, dadurch gekennzeichnet, daß der Wasseranschluß (23) der Meßkammer (19) als eine flexible zum Rotor (17) führende Leitung ausgebildet und mit einer in dem Rotor (17) ortsfest angeordneten Verbindungsleitung (27) verbunden ist, welche Verbindungsleitung (27) an eine über Rotationsdichtungen (29) abgedichtete, zwischen Rotor (17) und Trägerring (12) angeordnete ringförmige Wasserkammer (28) angeschlossen ist.

18. Extrudieranlage nach Anspruch 17, dadurch gekennzeichnet, daß die Wasserkammer (28) an einem in dem Trägerring (12) ausgebildeten Wasserzulauf (31) und an eine über eine Ventilanordnung (33) regelbare Abzugsleitung (32) angeschlossen ist.

19. Extrudieranlage nach einem der Ansprüche 1 bis 18, dadurch gekennzeichnet, daß an dem Trägerring (12) in Extrudierrichtung vor der Meßvorrichtung (16) eine auf den Durchmesser des extrudierten Rohres (11) einstellbare Ziehblende (24) angeordnet ist.

20. Extrudieranlage nach einem der Ansprüche 1 bis 19, dadurch gekennzeichnet, daß in Extrudierrichtung hinter der Meßvorrichtung (16) eine auf den Durchmesser des extrudierten Rohres (11) einstellbare zweite Ziehblende (24) angeordnet ist.

21. Extrudieranlage nach einem der Ansprüche 1 bis 20, dadurch gekennzeichnet, daß eine zusätzliche und mit eigener Wasserversorgung (41) und einer Abdichtung (42) gegen das extrudierte Rohr (11) ausgebildete Wasserkammer (40) zum Aufbringen eines Wasserfilms auf das extrudierte Rohr (11) in Extrudierrichtung vor der Meßvorrichtung (16) angeordnet ist.

22. Extrudieranlage nach einem der Ansprüche 1 bis 21, dadurch gekennzeichnet, daß die Meßvorrichtung (16) in einer ein Wasser-Vollbad aufweisenden Kühlkammer (15b) angeordnet ist.

23. Extrudieranlage nach einem der Ansprüche 1 bis 22, dadurch gekennzeichnet, daß die der Meßvorrichtung (16) vorgeschaltete Kalibrierhülse (13) in einer der Vollbad-Kühlkammer (15b) vorgeschalteten und von dieser abgetrennten, mit einer Sprühkühlung ausgerüsteten Kühlkammer (15a) angeordnet ist und zwischen den Kühlkammern (15a, 15b) Verbindungen (25, 25a) eingerichtet sind.
